# EUROPÄISCHE PATENTSCHRIFT

(11) **EP 3 335 920 B1**
(45) Veröffentlichungstag und Bekanntmachung des Hinweises auf die Patenterteilung: **06.01.2021**
(21) Anmeldenummer: 17203890.3
(22) Anmeldetag: 27.11.2017
(51) Int. Cl.: B60K 15/05, B60K 28/00, B60K 15/03

(54) **VERFAHREN ZUM VERHINDERN EINER FREIGABE EINER ABDECKUNG EINER MEDIENZUFUHREINRICHTUNG EINES KRAFTFAHRZEUGS**
METHOD FOR PREVENTING A RELEASE OF A COVER FOR A MEDIA SUPPLY DEVICE OF A MOTOR VEHICLE
PROCÉDÉ PERMETTANT D'ÉVITER LA LIBÉRATION D'UN COUVERCLE D'UN DISPOSITIF D'ALIMENTATION EN FLUIDES D'UN VÉHICULE AUTOMOBILE

(30) Priorität: 14.12.2016 DE 102016224983
(43) Veröffentlichungstag der Anmeldung: 20.06.2018
(73) Patentinhaber: Bayerische Motoren Werke Aktiengesellschaft, 80809 München (DE)
(72) Erfinder: Friedrich, Adrian, 85354 Freising (DE); Hummel, Holger, 80935 München (DE); Pelger, Andreas, 85737 Ismaning (DE)

(56) Entgegenhaltungen:
- DE-A1-102008 047 394
- US-A1- 2003 062 210
- US-A1- 2013 074 985

## Beschreibung

Die Erfindung betrifft ein Verfahren zum Vermeiden einer Notentriegelung oder Freigabe einer Karosserieklappe zum Abdecken einer Einfülleinrichtung eines Kraftstoffbehälters eines Kraftfahrzeugs. Dabei soll das erfindungsgemäße Verfahren einen vorgegebenen Ablauf von vorgegebenen Notentriegelungs- oder Freigabemaßnahmen vermeiden, wenn die Notentriegelung oder ein Betankungssignal situationsbedingt unberechtigt ausgelöst wird oder eine Freigabe nicht erwünscht ist.

Durch eine solche Karosserieklappe kann insbesondere auch ein Medieneinfüllsystem abgedeckt sein, was ganz allgemein ein Überbegriff für ein Tankeinfüllsystem, eine Ladeeinrichtung für elektrischen Strom oder Befülleinrichtungen für andere, für einen Betrieb des Kraftfahrzeugs notwendige Medien ist, zum Beispiel Wasserstoff.

Karosserieklappen, wie oben beschrieben, insbesondere zum Abdecken von Einfülleinrichtungen von in Kraftfahrzeugen angeordneten Behältern für beispielsweise Benzin oder Diesel einer Tankanlage, sind bei Kraftfahrzeugen bekannt. Die Karosserieklappe zum Abdecken einer Einfülleinrichtung dient dazu, ein Eindringen von Verunreinigungen und Feuchtigkeit im Bereich einer Tankmulde zu reduzieren, sowie ein ansprechendes Äußeres herzustellen, indem die Karosserieklappe als Tankklappe einen Tankdeckel oder elektrische Steckdosen nach außen hin kaschiert. Es sind verschiedene Betätigungsmechanismen für solche Tankklappen bekannt, zum Beispiel gibt es mechanische Push-Push-Systeme mit Herzkurve und Federelement für die Betätigung der Tankklappen zur Medienbefüllung des Kraftfahrzeugs. Außerdem sind Tankklappen mit Eingriff zum manuellen Öffnen und elektrisch ausgelöste Klappen bekannt. Bei letzteren wird beim Druck auf die Tankklappe mit einer bestimmten Kraft ein HAL-Sensor bzw. ein Mikroschalter geschaltet.

Die US 2003/062210 A1 beschreibt ein Betankungssicherheitssystem für ein Kraftfahrzeug mit einem Schalter an der Tankklappe, der verhindert, dass der Fahrzeugmotor läuft, wenn diese offen ist. Zusätzlich wird diese Funktion nur ausgeführt, wenn im Falle eines verbauten Automatikgetriebes dessen Parksperre oder im Falle eines verbauten manuell geschalteten Getriebes, dieses in Leerlaufstellung und eine Parkbremse angezogen ist.

Bei den bekannten und auch bei letztgenannter Karosserieklappe zum Abdecken einer Einfülleinrichtung hat es sich als nachteilig herausgestellt, dass ein Öffnen durch eine nicht autorisierte Person oder eine durch ein Steuergerät als offen registrierte Karosserieklappe über das Steuergerät bestimmte notwendige Folgefunktionen veranlasst. Je nach Betriebsmedium können diese Folgefunktionen verschieden und aufwändig sein und zum Beispiel eine Deaktivierung der Fahrbereitschaft und/oder eine Demobilisierung durch eine mechanische Einrichtung und/oder eine Blockierung einer Medienzufuhr zum Betrieb des Kraftfahrzeugs umfassen.

Deshalb ist es Aufgabe der Erfindung, ein verbessertes Verfahren zum Vermeiden einer Einleitung von Notentriegelungsfolge- bzw. Karosserieklappenfreigabefunktionen für eine Abdeckung einer Medienzufuhreinrichtung eines Kraftfahrzeugs vorzuschlagen, wenn Entriegelungssignale in einem Steuergerät vorliegen, diese aber nicht verifiziert sind.

Die Aufgabe wird erfindungsgemäß durch die Verfahrensschritte des einzigen Anspruchs gelöst.

Nach der Erfindung sieht ein Verfahren im Falle einer Fehlbedienung einer Abdeckung einer Medienzufuhreinrichtung eines Kraftfahrzeugs, wodurch diese, wenn trotz Unzugänglichkeit, einem Steuergerät die Medienzufuhreinrichtung als zugänglich signalisiert wird und dadurch die Funktionen, Deaktivierung der Fahrbereitschaft des Kraftfahrzeugs und Demobilisierung des Kraftfahrzeugs durch eine mechanische Einrichtung und Blockierung einer Medienzufuhr zum Betrieb des Kraftfahrzeugs ausgelöst werden, vor, dass das Steuergerät diese Funktionen ausschließlich nach Vorliegen wenigstens eines der folgenden Signale auslöst:
- ein Sensorsignal eines an der Karosserieklappe angeordneten Näherungssensors, aufgrund einer Authentifizierung einer sich annähernden Person, die einen vorbestimmten Abstand zum Näherungssensor unterschreitet, mittels eines vom Kraftfahrzeug separaten ID-Gebers einer Funkkommunikation,
- ein Signal einer von einer von einer Person bedienbaren Eingabeeinheit, insbesondere ein Softwaresignal,
- ein Sensorsignal zur Betankungsanforderung.

Das hat den Vorteil, dass eine nicht autorisierte Person, die zum Beispiel die Karosserieklappe öffnet, dadurch keine Folgefunktionen auslösen kann oder diese durch eine geschlossene, vom Steuergerät aber als offen detektierte Karosserieklappe in Gang gesetzt werden.

Ein Auslösen von Folgefunktionen einer Entriegelung einer Medienbefülleinrichtung, erst nachdem diese durch eine befugte Person, beispielsweise den Fahrer des Kraftfahrzeugs, quittiert wurde, verhindert vorteilhafterweise die Notwendigkeit einer aufwändigen Wiederinbetriebsetzung des Kraftfahrzeugs bei Fehlbedienung der Entriegelung oder Notentriegelung. Dazu kann zum Beispiel auch am Steuergerät abgefragt werden, ob eine Betankungsanforderung unmittelbar vor Erkennen des Zustands "Karosserieklappe offen" erfolgte. Bei negativer Abfrage kann dann eine Meldung an den Fahrer unterdrückt werden. Auch kann ein Tankwunsch an der Karosserieklappe mittels Funkübertragung authentifiziert und dann erst die Karosserieklappe freigegeben werden. Dies kann auf einfache Weise, zum Beispiel über ein gängiges, funkgestütztes, so genanntes Komfort-Zugangssystem verwirklicht werden, wenn sich ein Fahrzeugöffnungssignalgeber in unmittelbarer Nähe zum Medienbefüllanschluß befindet. Ohne positive Authentifizierung werden dann dem Fahrer auch keine weiteren Meldungen angezeigt.

Ein Unterdrücken von Meldungen, zum Beispiel der Meldung Tankbereitschaft herstellen, kann situationsabhängig erfolgen. So ist es sinnvoll, diese Meldungen zu unterdrücken, wenn keine Betankung erfolgen kann oder keine zu erwarten ist, da das Fahrzeug sich zum Beispiel nicht an einer Tankstelle befindet, was zum Beispiel eine Ortungssystem oder Bildauswertung ergibt, oder wenn der Tankfüllstand, insbesondere abhängig von der noch zurückzulegenden Fahrstrecke, eine Betankung nicht erforderlich macht. Sollte eine Tankaufforderung trotzdem wiederholt werden, kann dann dem Fahrer eine Meldung angezeigt werden, insbesondere für den Fall, dass eine andere Person ein Betanken übernimmt.

## Patentansprüche

1. Verfahren für den Fall einer Fehlbedienung einer Abdeckung einer Medienzufuhreinrichtung eines Kraftfahrzeugs, wodurch diese wenn trotz Unzugänglichkeit einem Steuergerät die Medienzufuhreinrichtung als zugänglich signalisiert wird und dadurch die Funktionen, Deaktivierung der Fahrbereitschaft des Kraftfahrzeugs und/oder Demobilisierung des Kraftfahrzeugs durch eine mechanische Einrichtung und/oder Blockierung einer Medienzufuhr zum Betrieb des Kraftfahrzeugs ausgelöst werden, wobei das Verfahren vorsieht, dass das Steuergerät diese Funktionen ausschließlich nach Vorliegen wenigstens eines der folgenden Signale auslöst:
- ein Sensorsignal eines an der Karosserieklappe angeordneten Näherungssensors, aufgrund einer Authentifizierung einer sich annähernden Person, die einen vorbestimmten Abstand zum Näherungssensor unterschreitet, mittels eines vom Kraftfahrzeug separaten ID-Gebers einer Funkkommunikation,
- ein Signal einer von einer Person bedienbaren Eingabeeinheit,
- ein Sensorsignal zur Betankungsanforderung.

## Claims

1. Method for the case of faulty operation of a cover of a media supply device of a motor vehicle, as a result of which, despite inaccessibility, the media supply device is signalled to a control unit as being accessible and, as a result, the functions, deactivation of the driving readiness of the motor vehicle and/or demobilization of the motor vehicle, are triggered by a mechanical device and/or blocking of a media supply for operating the motor vehicle is triggered,
wherein the method provides for the control unit to trigger these functions solely according to the presence of at least one of the following signals:
- a sensor signal from a proximity sensor arranged on the body flap, on account of authentication of an approaching person, who undershoots a predetermined distance to the proximity sensor, by means of a radio communication ID transponder which is separate from the motor vehicle,
- a signal from an input unit which can be operated by a person,
- a sensor signal for requesting refuelling.

## Revendications

1. Procédé destiné au cas d'une fausse manœuvre d'un couvercle d'un dispositif d'alimentation en fluides d'un véhicule automobile, par lequel le dispositif d'alimentation en fluides est signalé à un appareil de commande comme étant accessible malgré le fait qu'il est inaccessible, et de ce fait, les fonctions, la désactivation de l'ordre de marche du véhicule automobile et/ou la démobilisation du véhicule automobile par un dispositif mécanique et/ou le blocage d'une alimentation en fluides pour le fonctionnement du véhicule automobile sont déclenchés, le procédé prévoyant que l'appareil de commande déclenche ces fonctions exclusivement en présence d'au moins l'un des signaux suivants :
- un signal de capteur d'un capteur de proximité disposé sur le volet de carrosserie, en raison d'une authentification d'une personne qui s'approche et qui soupasse une distance prédéterminée par rapport au capteur de proximité, au moyen d'un transpondeur d'identification, séparé du véhicule automobile, d'une communication radio,
- un signal d'une unité d'entrée pouvant être actionnée par une personne,
- un signal de capteur concernant une demande de ravitaillement.
